# EUROPÄISCHE PATENTSCHRIFT

(11) **EP 1 282 854 B1**
(45) Veröffentlichungstag und Bekanntmachung des Hinweises auf die Patenterteilung: **26.11.2003**
(21) Anmeldenummer: 01943062.8
(22) Anmeldetag: 11.05.2001
(51) Int. Cl.: G06F 3/023

(54) **VERFAHREN ZUR EINGABE EINER ZEICHENFOLGE UND VORRICHTUNG**
METHOD AND DEVICE FOR INPUTTING A SEQUENCE OF CHARACTERS
PROCEDE ET DISPOSITIF POUR ENTRER UNE SUITE DE CARACTERES

(30) Priorität: 11.05.2000 DE 10022970
(43) Veröffentlichungstag der Anmeldung: 12.02.2003
(73) Patentinhaber: ROBERT BOSCH GMBH, 70442 Stuttgart (DE)
(72) Erfinder: LUNGWITZ, Thomas, 70190 Stuttgart (DE); KOSSIRA, Martin, 71672 Marbach am Neckar (DE)
(86) Internationale Anmeldenummer: DE0101793
(87) Internationale Veröffentlichungsnummer: WO01086404

(56) Entgegenhaltungen:
- WO-A-99/30222
- US-A- 5 963 671
- US-A- 6 037 942
- NANTAIS T ET AL: "A PREDICTIVE SELECTION TECHNIQUE FOR SINGLE-DIGIT WITH A VISUAL KEYBOARD" IEEE TRANSACTIONS ON REHABILITATION ENGINEERING, IEEE INC. NEW YORK, US, Bd. 2, Nr. 3, 1. September 1994 (1994-09-01), Seiten 130-135, XP000477761 ISSN: 1063-6528

## Beschreibung

### Stand der Technik

Die Erfindung geht aus von einem Verfahren zur Eingabe einer Zeichenfolge nach der Gattung des Hauptanspruchs. Zeichenfolgen werden im allgemeinen mittels einer Tastatur, die für jedes Zeichen eine Taste vorsieht, in eine Rechenvorrichtung eingegeben. Bei Geräten, die für eine Tastatur nur wenig Platz zur Verfügung haben, wie z.B. Telefone oder Navigationsvorrichtungen, ist bekannt, mittels jeweils einer Taste eine Vielzahl von Buchstaben zusammenzufassen und durch eine entsprechende Auswahl nach einem Druck auf diese Taste den entsprechenden Buchstaben auszusuchen. Dieses Verfahren fordert jedoch ebenfalls eine Mindestanzahl von einem Benutzer zur Verfügung stehenden Tasten. Weiterhin ist bekannt, einem Benutzer eine Liste anzubieten, aus der der Benutzer einzelne Zeichen auswählen kann. Die Liste ist dabei z.B. so gestaltet, dass nur eingebbare Zeichen ausgewählt werden. Hierbei muß jedoch ein Benutzer bei jeder Eingabe eine möglicherweise lange Liste von Zeichen durchgehen, um jeweils zu dem von ihm in der linear dargestellten Liste gewünschten Zeichen zu gelangen.

### Vorteile der Erfindung

Das erfindungsgemäße Verfahren mit den Merkmalen des Hauptanspruchs hat demgegenüber den Vorteil, dass auszuwählende Zeichen in einem zweidimensionalen Feld dargestellt sind und dass durch die Eingabe einer Richtung im erfindungsgemäßen Sinn ein Benutzer sehr schnell und übersichtlich zwischen auswählbaren Zeichen wechseln und die eingegebenen Zeichen zu einer in einer der Eingabevorrichtung zugeordneten Recheneinheit abgelegten Zeichenfolge kombinieren kann, da für die Eingabe eines Zeichens keine lange Liste durchgegangen werden muß, sondern eine freie Beweglichkeit in dem zweidimensionalen Feld zwischen den auswählbaren Zeichen gegeben ist. Hierdurch kann auf eine Tastatur im herkömmlichen Sinne verzichtet werden, da nur ein Bedienelement für eine Richtungseingabe sowie ein Bedienelement für eine Bestätigung des eingebbaren Zeichens erforderlich ist. Hierdurch wird eine Buchstabeneingabe in vorteilhafter Weise auch für Anwendungen ermöglicht, bei denen nur wenig Platz für Bedienelemente bzw. Tasten vorhanden ist, so z.B. bei mobilen Handgeräten oder bei in Fahrzeugen eingebauten Recheneinheiten. Besonders vorteilhaft ist dabei, dass eine intuitive Steuerung zwischen allein den auswählbaren Zeichen möglich ist, während die nicht auswählbaren Zeichen dennoch dargestellt werden. Ein Wechsel zwischen einem eingebbaren Zeichen, das über eine Bestätigungseingabe, z.B. über eine Bestätigungstaste, eingebbar ist, zu einem anderen auswählbaren Zeichen erfolgt dabei in der Weise, dass in Abhängigkeit von der Richtungseingabe ein anderes, auswählbare Zeichen als eingebbares Zeichen gewählt wird, das nun über die Bestätigungstaste eingebbar ist. Das bisher eingebbare Zeichen ist nun nicht mehr direkt über die Bestätigungstaste eingebbar, so dass eine eindeutige Zuordnung der Bestätigungstaste zu einem Zeichen gegeben ist.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, die Zeichen in dem Feld in Zeilen und Spalten anzuordnen und für eine Richtungsangabe ein nächstliegendes Zeichen in der jeweiligen in der gewünschten Richtung liegenden nächsten Zeile bzw. Spalte auszuwählen. Eine Orientierung an der nächsten Zeile oder Spalte ermöglicht es einem Benutzer, sich intuitiv zwischen den angezeigten Zeichen in dem zweidimensionalen Feld zurechtzufinden. Hierbei ist insbesondere vorteilhaft, dass bei mehreren Zeichen in einer Zeile bzw. Spalte, das dem ursprünglich eingebbaren Zeichen jeweils nächstliegende Zeichen als neues, eingebbares Zeichen in der Recheneinheit bestimmt wird.

Außerdem ist vorteilhaft, nach der Eingabe eines Zeichens ein neues, eingebbares Zeichen zumindest in der Nähe des zuvor eingegebenen Zeichens zu wählen, da ein Benutzer auf dieses vorher eingegebene Zeichen noch seinen Blick gerichtet hat.

Ferner ist vorteilhaft, das neue auszuwählende Zeichen möglichst in der Mitte der Anzeige zu wählen, da hierdurch eine Bewegung zu einem neuen, auszuwählenden Zeichen im statistischen Mittel sehr schnell geht, da alle auszuwählenden Zeichen von der Mitte einer Anzeige gleich weit entfernt sind.

Weiterhin ist vorteilhaft, durch die Recheneinheit eine eingegebene Zeichenfolge automatisch zu einer gewünschten Zeichenfolge zu ergänzen, sofern eine eingegebene Zeichenfolge nur noch auf eine eindeutige Weise zu einer in der der Recheneinheit zugewiesenen Speichereinheit abgelegten Zeichenfolge kombinierbar ist.

### Zeichnung

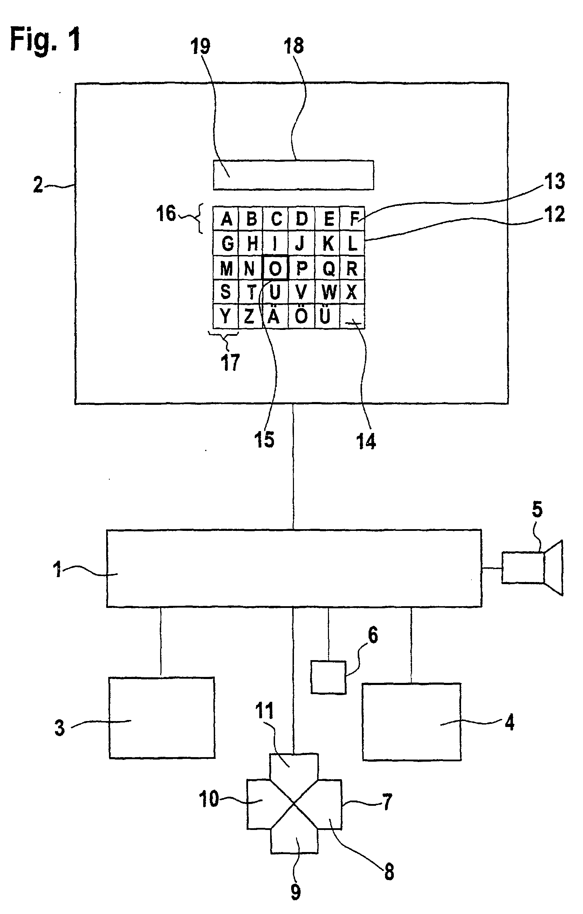

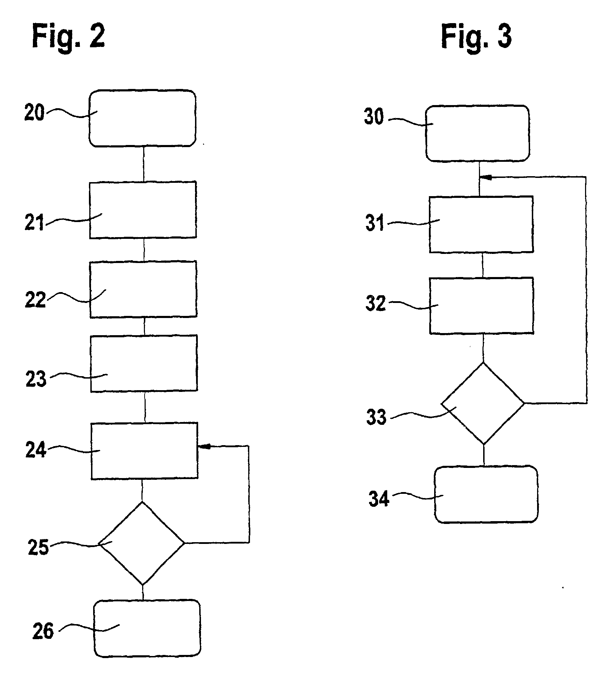

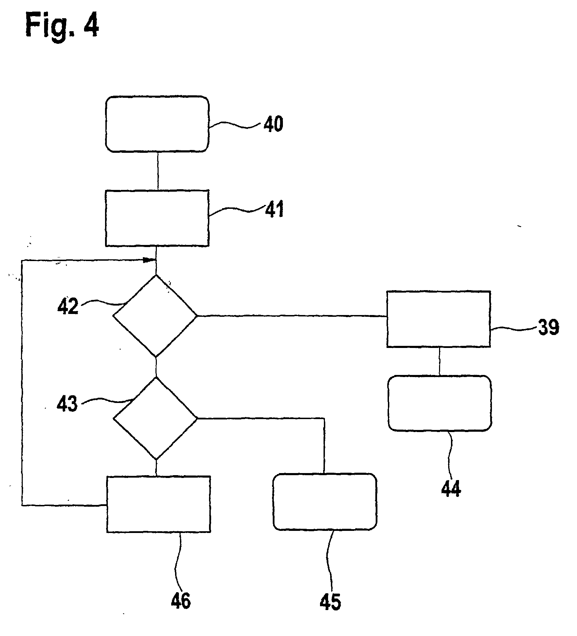

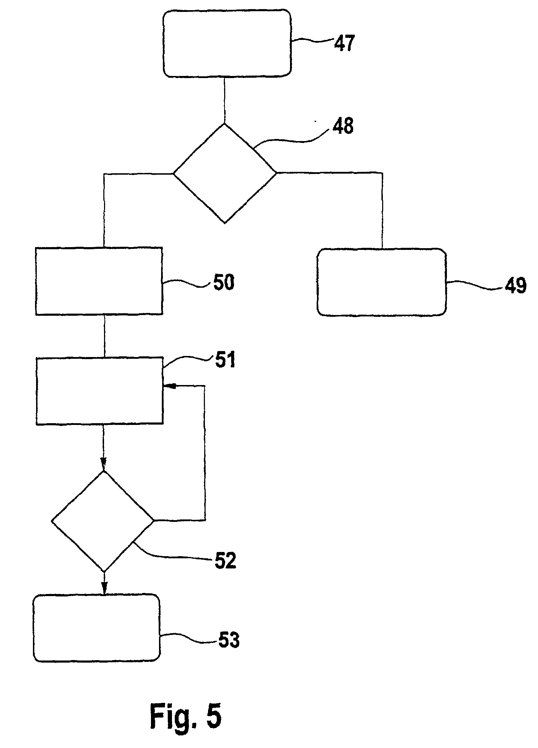

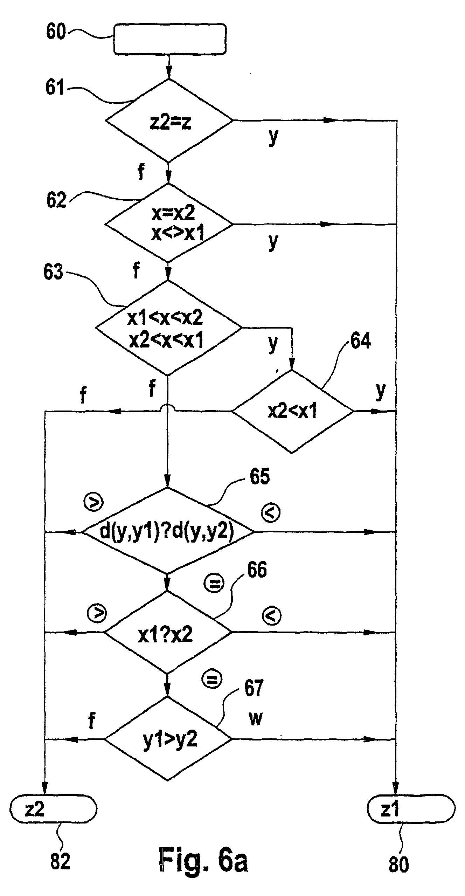

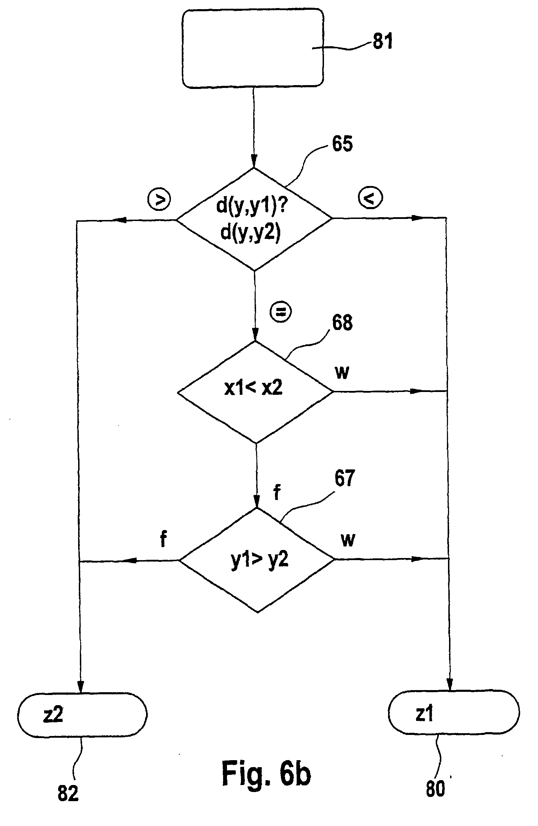

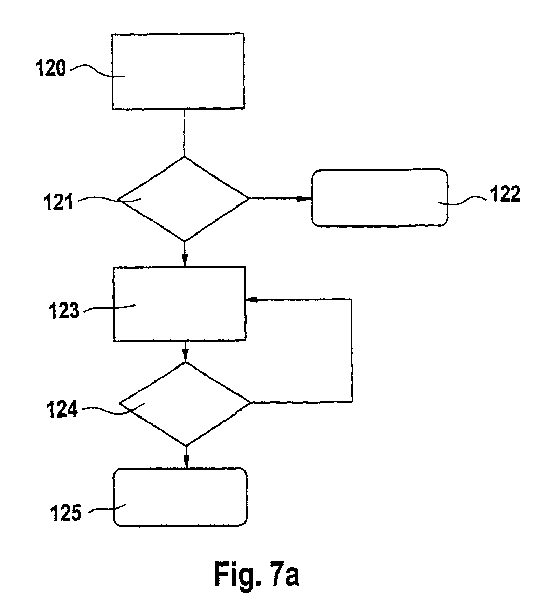

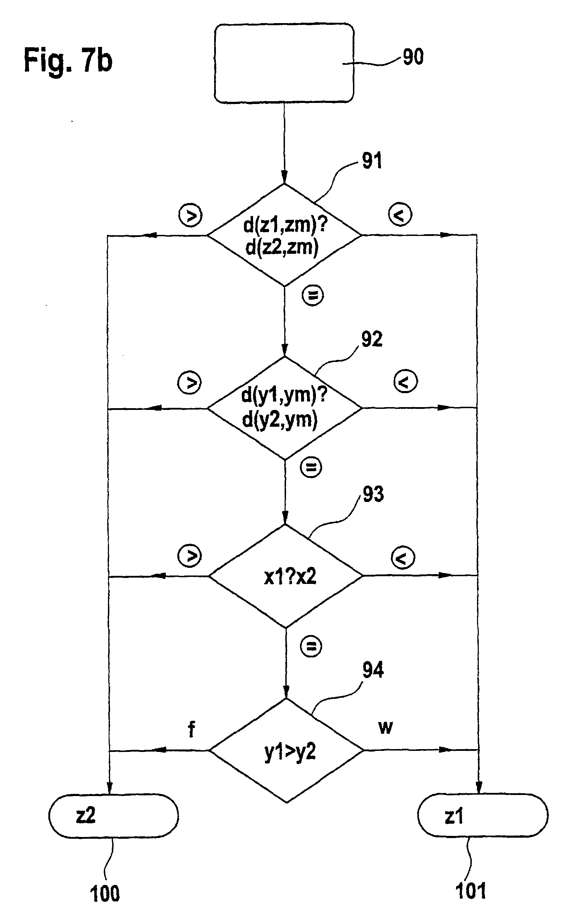

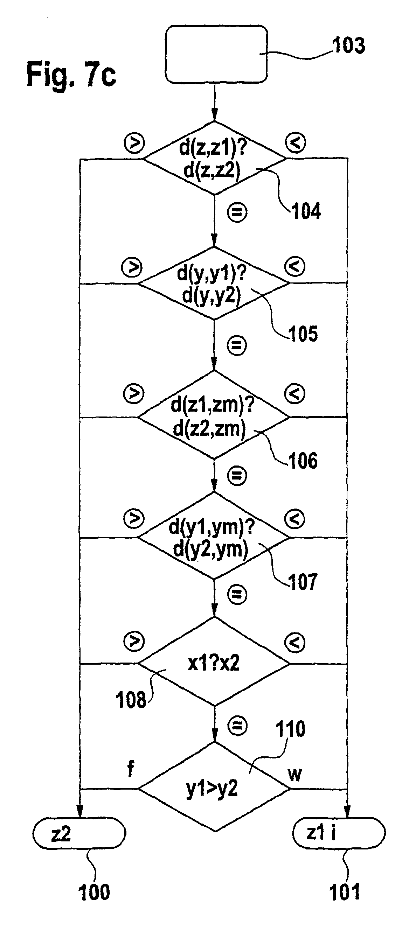

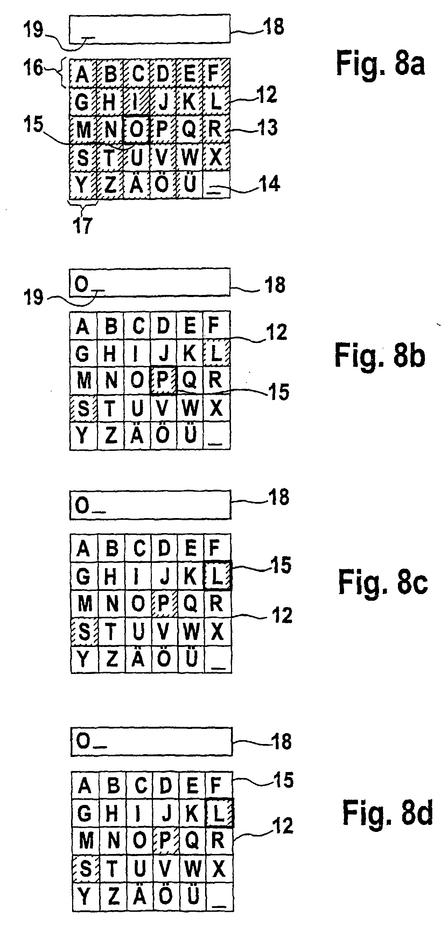

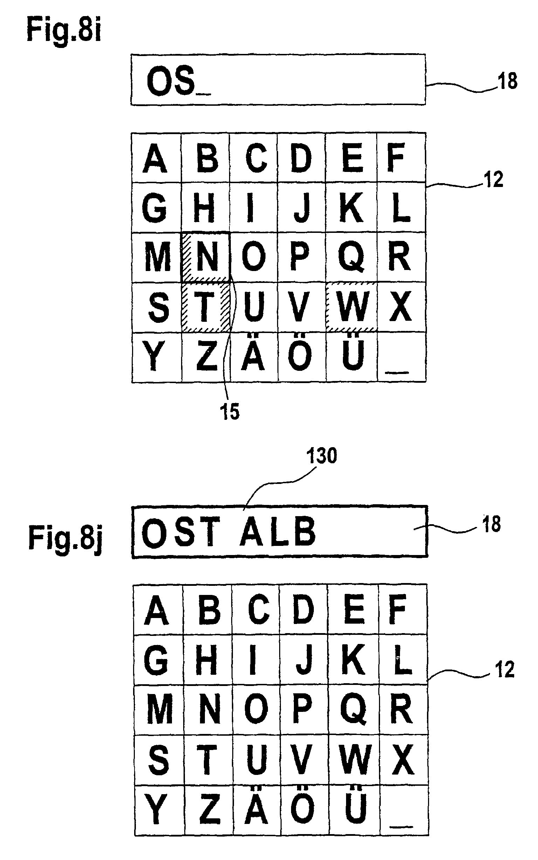

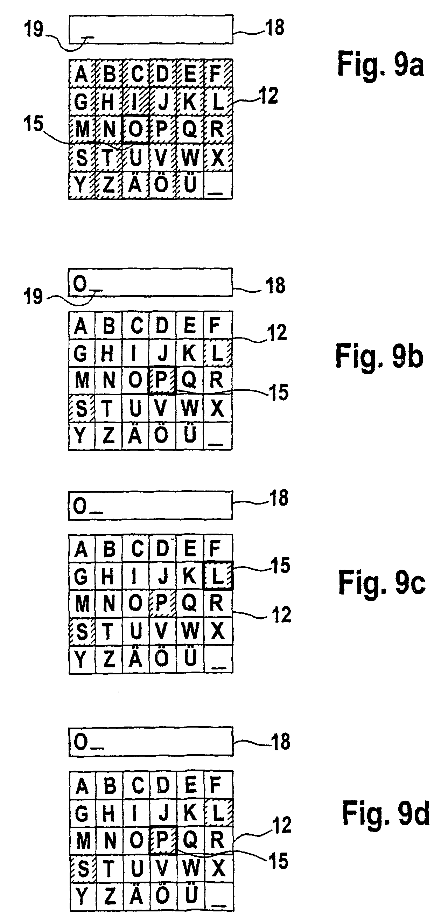

Ausführungsbeispiele der Erfindung sind in der Zeichnung dargestellt und in der nachfolgenden Beschreibung näher erläutert. Figur 1 zeigt eine Navigationsvorrichtung mit einer Recheneinheit, einer Anzeige und Bedienmitteln zur Durchführung des erfindungsgemäßen Verfahrens. Figur 2 zeigt einen Ablauf der Funktionsweise der Navigationsvorrichtung unter Einbeziehung der erfindungsgemäßen Eingabe eines Fahrziels. Figur 3 zeigt ein erfindungsgemäßes Verfahren zur Eingabe eines Fahrziels im Detail. Figur 4 zeigt eine erfindungsgemäße Eingabe mit einer Auswahl eines Zeichens. Figur 5 zeigt als Detail des erfindungsgemäßen Verfahrens für eine Eingabe einen Wechsel zwischen auswählbaren Zeichen. Figur 6a zeigt ein erstes Ausführungsbeispiel für einen erfindungsgemäßen Vergleich zwischen zwei auswählbaren Zeichen, um die Position eines nächsten, eingebbaren Zeichens zu bestimmen. Figur 6b zeigt ein weiteres Ausführungsbeispiel für einen derartigen Vergleich zweier Zeichen. Figur 7a zeigt ein erfindungsgemäßes Verfahren zur Auswahl eines eingebbaren Zeichens nach einer erfindungsgemäßen Eingabe eines Zeichens. Figur 7b zeigt ein erstes Ausführungsbeispiel für die Bestimmung des nächsten eingebbaren Zeichens verwendeten Vergleich zweier auswählbarer Zeichen. Figur 7c zeigt ein zweites Ausführungsbeispiel für einen derartigen Vergleich zweier Zeichen. Die Figuren 8a bis 8j zeigen eine Anzeigendarstellung bei einer Ausführung des erfindungsgemäßen Verfahrens bei der Verwendung eines anhand der Figur 6b beschriebenen Vergleichs. Die Figuren 9a bis 9i zeigen eine Anzeigendarstellung bei einer Ausführung des erfindungsgemäßen Verfahrens bei einer Verwendung des zu der Figur 6a beschriebenen Vergleichs.

### Beschreibung des Ausführungsbeispiels

Das erfindungsgemäße Verfahren zur Eingabe einer Zeichenfolge in eine Recheneinheit kann für alle Arten von Recheneinheiten verwendet werden. Insbesondere ist es für Recheneinheiten vorgesehen, bei denen nur geringer Platz für Bedienelemente und Anzeigen zur Verfügung steht bzw. gewünscht ist. Insbesondere kann das erfindungsgemäße Verfahren für die Eingabe von Zeichenfolgen, insbesondere von Buchstabenfolgen, für Navigationsvorrichtungen in Fahrzeugen, vorzugsweise in Kraftfahrzeugen, tragbare Kleincomputer, sogenannte Personal digital assistants (PDA), für Mobiltelefone sowie für mobile Internet-Terminals verwendet werden. Die Funktionsweise des erfindungsgemäßen Verfahren wird im Folgenden anhand einer in einem Kraftfahrzeug angeordneten Navigationsvorrichtung erläutert.

In der Figur 1 ist eine Navigationsvorrichtung, die in einem Fahrzeug angeordnet ist, dargestellt. Die Navigationsvorrichtung besteht aus einer Recheneinheit 1, die mit einer Anzeige 2 verbunden ist. Ferner ist die Recheneinheit 1 mit einer Positionsermittlungseinheit 3 verbunden, vorzugsweise mit einem GPS-Empfänger (GPS = Global Positioning System). Die Recheneinheit 1 ist ferner mit einer Speichereinheit 4, einem Lautsprecher 5, einer Bestätigungstaste 6 sowie einer Richtungseingabevorrichtung 7 mit einer ersten Taste 8, einer zweiten Taste 9, einer dritten Taste 10 und einer vierten Taste 11 verbunden. In der Anzeige 2 ist in der Figur 1 ein Zeichenfeld 12 dargestellt, das Buchstaben 13 und Sonderzeichen, hier ein Leerzeichen 14, enthält. Aus Gründen der Übersichtlichkeit der Zeichnung ist lediglich ein Buchstabe besonders bezeichnet. In dem Zeichenfeld 12 ist ferner ein Buchstabe, hier der Buchstabe "O", durch einen Auswahlrahmen 15 hervorgehoben. Das Zeichenfeld 12 hat Zeilen 16 und Spalten 17, so dass das Zeichenfeld 12 eine zweidimensionale Ordnung bildet und ein Buchstabe durch die Angabe einer Zeile und einer Spalte eindeutig bestimmt ist. Ferner ist in der Anzeige 2 ein Ausgabefeld 18 angezeigt, in dem eine Eingabemarke 19 angezeigt wird. Die Richtungseingabevorrichtung 7 ist in einem bevorzugten Ausführungsbeispiel als eine Kreuzwippe ausgeführt, bei der die Tasten 8, 9, 10 und 11 starr miteinander verbunden sind und Druck auf die Kreuzwippe im Bereich einer der Tasten zu einer Betätigung der jeweils gedrückten Taste führt. In einem in der Figur 1 nicht gezeigten Ausführungsbeispiel kann die Richtungseingabevorrichtung auch als ein sogenannter Joy Stick ausgeführt sein, bei dem eine Richtungseingabe durch eine Bewegung eines Eingabestifts in eine gewünschte Richtung an die Recheneinheit 1 übermittelt wird. Ferner ist eine Ausführung als ein Trackball möglich, in dem in einer Halterung eine Kugel in eine gewünschte Richtung bewegt wird und diese Bewegung von der Recheneinheit 1 erfasst wird. Bei dem in der Figur 1 dargestellten Ausführungsbeispiel wird ein Druck auf die erste Taste 8 als ein Wunsch einer Bewegung nach rechts hinsichtlich eines durch den Auswahlrahmen 15 in dem Zeichenfeld 12 gekennzeichneten Zeichen gewertet. Ein Druck auf die zweite Taste 9 wird hinsichtlich des durch den Auswahlrahmen 15 gekennzeichneten Zeichens als eine Bewegung nach unten in dem Zeichenfeld 12 gewertet. Ein Druck auf die dritte Taste 10 wird entsprechend als eine Bewegung nach links und ein Druck auf die vierte Taste 11 entsprechend als eine Bewegung nach oben gewertet. In einem bevorzugten Ausführungsbeispiel wird zunächst nach einem Zeichen gesucht, das in der gleichen Spalte bzw. in der gleichen Zeile wie das zuvor durch den Auswahlrahmen 15 gekennzeichnete, eingebbare Zeichen liegt. In dem Zeichenfeld 12 ist jeweils immer nur ein Zeichen durch den Auswahlrahmen 15 hervorgehoben. Bei dem in der Figur 1 gezeigten Ausführungsbeispiel ist das Zeichenfeld 12 quadratisch gewählt. Es ist jedoch auch eine rechteckige Anordnung des Zeichenfeldes möglich, bei dem z.B. die Anzahl der Spalten die Anzahl der Zeilen übersteigt. Bei einer Anordnung mit einer gleichen Anzahl von Spalten und Zeilen ist die maximale, zwischen zwei Zeichen zurückzulegende Strecke minimal. Durch eine Bedienung der Bestätigungstaste 6 ist ein durch den Auswahlrahmen 15 hervorgehobenes Zeichen im Zeichenfeld 12 bestätigbar, wobei die Recheneinheit 1 eine Betätigung der Bestätigungstaste 6 erfasst und das durch den Auswahlrahmen 15 hervorgehobene Zeichen als eingegebenes Zeichen erfasst und es der bisher eingegebenen Zeichenfolge hinzufügt, die dann in dem Ausgabefeld 18 angezeigt wird. Die Anzeige 2 ist in einem bevorzugten Ausführungsbeispiel als eine Flüssigkristallanzeige ausgeführt. Jedoch sind auch andere Arten von Anzeigen, z.B. Elektrolumineszenzanzeigen oder Kathodenstrahlröhrenanzeigen möglich. Die Recheneinheit 1 vergleicht die mittels der Richtungseingabevorrichtung 7 und der Bestätigungstaste 6 eingegebenen Zeichenfolge mit in der Speichereinheit 4, vorzugsweise einer Festplatte, einer Compakt-Disk (CD) oder einem Arbeitsspeicher, abgelegten Zeichenfolge und bestimmt, falls eine eingegebene Zeichenfolge mit einer abgelegten Zeichenfolge übereinstimmt, diese Zeichenfolge als ein neu zu wählendes Fahrziel. Die Anzeige 2 sowie die Bestätigungstaste 6 als auch die Richtungseingabevorrichtung 7 sind gut zugänglich für einen Fahrer in dem Fahrzeug angeordnet. Die übrigen Elemente können in einem bevorzugten Ausführungsbeispiel für den Fahrer verdeckt angeordnet werden, z.B. hinter der Dashboardverkleidung. Als ein bevorzugtes Ausführungsbeispiel ist die Bestätigungstaste 6 in die Richtungseingabevorrichtung 7, z.B. als ein mittig zwischen den Tasten 8, 9, 10, 11 angeordneter Druckknopf eingebracht. Die Bestätigung kann bei einer Ausführung als eine Kreuzwippe durch einen zentralen Druck auf die Kreuzwippe erfolgen.

In der Figur 2 ist ein Navigationsverfahren unter Einbeziehung einer erfindungsgemäßen Fahrzieleingabe erläutert. Die Recheneinheit 1 wird in einem Initialisierungsschritt 20 eingeschaltet, z.B. bei einem Einschalten der Zündung des Fahrzeugs. In einem anschließenden Positionsermittlungsschritt 21 wird mittels der Postionsermittlungseinheit 3 eine Fahrzeugposition ermittelt und an die Recheneinheit 1 übertragen. In einem anschließenden Eingabeschritt 22 wird auf erfindungsgemäße Weise das Fahrziel eingegeben. In einem anschließenden Routenberechnungsschritt 23 wird durch die Recheneinheit 1 unter Rückgriff auf eine in der Speichereinheit 4 abgelegte digitale Karte mit einem Straßen- und Wegenetz eine Fahrtroute zwischen der ermittelten Fahrzeugposition und dem eingegebenen Fahrziel berechnet. In einem anschließenden Ausgabeschritt 24 werden Fahranweisungen vorzugsweise über den Lautsprecher 5 an einen Fahrer ausgegeben. In einem anschließenden Prüfschritt 25 wird durch eine Positionsermittlung mittels der Positionsermittlungseinheit 3 überprüft, ob das eingegebene Fahrziel erreicht wurde. Ist dies der Fall, wird das Verfahren in einem Endschritt 26 beendet. Ist dies nicht der Fall, so wird von dem Prüfschritt 25 zu dem Ausgabeschritt 24 zurückverzweigt und die nächste Fahranweisung wird ausgegeben.

In der Figur 3 ist der Eingabeschritt 22 gemäß der Figur 2 im Detail dargestellt. Ausgehend von einem Initialisierungsschritt 30 wird die erfindungsgemäße Eingabe gestartet. In einem Ermittlungsschritt 31 werden die Zeichen ermittelt, die im Anschluss an die bisher eingegebene Zeichenfolge eingeben werden können, damit sich eine in der Speichereinheit 4 abgelegte Zeichenfolge ergibt. Wird der Ermittlungsschritt 31 zum erstem Mal erreicht, wird in dem Ermittlungsschritt 31 ermittelt, welche Zeichen als erstes Zeichen bei allen in der Speichereinheit 4 abgelegten Zeichenfolgen für mögliche Fahrziele erlaubt sind. Die eingegebenen Zeichen werden in dem Zeichenfeld 12 der Anzeige 2 hervorgehoben dargestellt. In dem Ermittlungsschritt 31 wird jeweils ein erstes auswählbares Zeichen von der Recheneinheit 1 ausgewählt und durch den Auswahlrahmen 15 gekennzeichnet. In einem anschließenden Eingabeschritt 32 wird auf erfindungsgemäße Weise das nächste Zeichen eingeben. In einem anschließenden Prüfschritt 33 wird überprüft, ob nunmehr das Fahrziel durch die bisher eingegebenen Zeichen hinsichtlich der in der Speichereinheit 4 abgelegten Zeichenfolgen eindeutig bestimmt ist. Ist dies der Fall, wird zu einem Endschritt 34 weiterverzweigt und das zu der Figur 2 beschriebene Navigationsverfahren wird mit dem Routenberechnungsschritt 23 fortgeführt. Ist das Fahrziel in dem Prüfschritt 33 noch nicht eindeutig bestimmt, so wird zu dem Ermittlungsschritt 31 zurückverzweigt, der nunmehr für das nächste, einzugebende Zeichen durchgeführt wird.

In der Figur 4 ist der Eingabeschritt 32 gemäß der Figur 3 im Detail dargestellt. An einen Initialisierungsschritt 40, in dem die in dem Ermittlungsschritt 31 ermittelten auswählbaren Buchstaben als Parameter übergeben werden, d.h. die Buchstaben, die eine Kombination zu einer in der Speichereinheit 4 abgelegten Zeichenfolge ermöglichen, schließt sich ein Darstellungsschritt 41 an, in dem die auswählbaren Zeichen in dem Zeichenfeld 12 hervorgehoben dargestellt werden, z.B. in einer anderen Farbgebung gegenüber den nicht auswählbaren Buchstaben. In dem bevorzugten Ausführungsbeispiel werden alle Zeichen dargestellt, entsprechend farblich abgesetzt auch nicht auswählbare Zeichen. In einem anschließenden ersten Prüfschritt 42 wird geprüft, ob nur ein auswählbares Zeichen zur Verfügung steht bzw. ob die Bestätigungstaste 6 gedrückt wurde. Ist dies der Fall, so wird zu einem Ausgabeschritt 39 weiter verzweigt, in dem in dem Ausgabefeld 18 die um das ausgewählte Zeichen ergänzte Zeichenfolge dargestellt wird. In einem Endschritt 44 wird der Eingabeschritt 32 beendet und es wird zu dem Prüfschritt 33 gemäß des Verfahrensablauf, der zu der Figur 3 beschrieben wurde, weiterverzweigt. Wurde die Bestätigungstaste 6 nicht gedrückt bzw. konnte keine eindeutige Zeichenzuordnung ermittelt werden, wird das Verfahren von dem ersten Prüfschritt 42 zu einem zweiten Prüfschritt 43 weiterverzweigt, in dem zunächst abgefragt wird, ob eine Tasteneingabe mittels der Bestätigungstaste 6 oder der Richtungseingabevorrichtung 7 erfolgt. Erfolgt innerhalb einer vorgegebenen Zeitspanne, z.B. zwei Minuten, keine Eingabe, so wird zu einem Endschritt 45 weiterverfolgt und die Eingabe wird beendet. Wird dagegen festgestellt, dass eine Taste gedrückt wurde, so wird zu dem Auswerteschritt 46 weiterverzweigt. Nach dem Auswerteschritt 46 wird zu dem ersten Prüfschritt 42 zurückverzweigt.

In der Figur 5 ist der Auswerteschritt 46 im Detail dargestellt. Ausgehend von einem Initialisierungsschritt 47 wird in einem anschließenden ersten Prüfschritt 48 geprüft, ob die Bestätigungstaste 6 gedrückt wurde. Ist dies der Fall, so wird zu dem Endschritt 49 weiterverzweigt und der Auswerteschritt 46 wird beendet. Ist dies nicht der Fall, so wird zu einem Ermittlungsschritt 50 weitergeleitet. Es muß eine Taste der Richtungseingabevorrichtung 7 gedrückt worden sein. In dem Ermittlungsschritt 50 wird die Taste der Richtungseingabevorrichtung 7 erfasst. Die auswählbaren Zeichen stehen der Recheneinheit 1 bereits zur Verfügung und sind vorzugsweise alphabetisch geordnet. In einem an den Ermittlungsschritt 50 anschließenden Vergleichsschritt 51 werden zwei der ausgewählten Zeichen miteinander verglichen. Es wird dabei das Zeichen ermittelt, das am ehesten zu der Richtungseingabe über die Richtungseingabevorrichtung 7 passt. In einem anschließenden zweiten Prüfschritt 52 wird geprüft, ob bereits alle auswählbaren Zeichen durch den Vergleichsschritt 51 mit einem anderen auswählbaren Zeichen verglichen wurden. Ist dies der Fall, so wird zu einem Endschritt 53 weiterverzweigt, wobei das Ergebnis des letzten Vergleichs als das nächste, anzuwählende Zeichen feststeht, auf das der Auswahlrahmen 15 gegebenenfalls verschoben wird. Im Anschluß wird der erste Prüfschritt 42 gemäß der Figur 4 ausgeführt. Wird in dem zweiten Prüfschritt 52 dagegen festgestellt, dass die Liste noch nicht vollständig abgearbeitet wurde, so wird das als Ergebnis des Vergleichsschritts 51 ermittelte Zeichen mit einem nächsten, noch nicht verglichenen, auswählbaren Zeichen verglichen, in dem von dem zweiten Prüfschritt 52 zu dem Vergleichsschritt 51 zurückverzweigt wird. In einem bevorzugten Ausführungsbeispiel wird als das nächste Zeichen das in alphabetischer Reihenfolge nächste Zeichen gewählt.

In der Figur 6a ist ein erstes Ausführungsbeispiel für eine erfindungsgemäße Durchführung des Vergleichsschritts 51 dargestellt.

Für diese und die folgenden Figuren werden zunächst Bezeichnungen für die Beschreibung des Verfahrens definiert. Das vor Erreichen des Ermittlungsschrittes 50 mit dem Auswahlrahmen 15 gekennzeichnete, eingebbare Zeichen wird mit dem Platzhalter z bezeichnet. Der Platzhalter z ist dabei von dem Buchstaben "z" selbst zu unterscheiden. z ist in dem Zeichenfeld 12 eingetragen, wobei die Position von z durch einen Spaltenwert x und einen Zeilenwert y gekennzeichnet ist, wobei x und y ebenfalls Platzhalter sind, die von den Buchstaben "x" und "y" zu unterscheiden sind. Die Spalten werden von links nach rechts und Zeilen von oben nach unten mit ganzen Zahlen ausgehend von eins durchnummeriert. Die beiden in dem Vergleichsschritt 51 direkt zu vergleichenden Zeichen werden als ein Zeichen z1 und als ein Zeichen z2 bezeichnet. Die Positionen von z1 und z2 sind entsprechend der Position von x durch die Platzhalter x1 und x2 für eine entsprechende Spalte und y1 sowie y2 für eine entsprechende Zeile von z1 bzw. z2 gekennzeichnet. Ein Abstand d zweier Zeilen bzw. Spalten ist als die Betragsdifferenz der beiden Spaltenwerte bzw. Zeilenwerte gegeben. Der Abstand d zweier Zeichen ist die Summe der Abstände d der Spalten und der Zeilen. In der Figur 6a wird das erfindungsgemäße Verfahren anhand des Drückens eines Benutzers auf die erste Taste 8 für die Richtung "nach rechts" erläutert. In einem Initialisierungsschritt 60 wird der Vergleich zweier Zeichen innerhalb des Vergleichsschritts 51 gestartet. In einem ersten Prüfschritt 61 wird überprüft, ob das Zeichen z2 gleich dem Zeichen z ist. In diesem Fall wird z1 als das Ergebnis des Vergleichs von z1 und z2 ausgewählt und als neues Zeichen für einen Vergleich mit einem noch zu prüfenden Zeichen verwendet, sofern noch nicht alle Zeichen verglichen wurden. Es wird zum einem ersten Endschritt 80 weiterverzweigt, mit dem der Vergleichsschritt 51 beendet wird. Wird in dem ersten Prüfschritt 61 festgestellt, dass z2 ungleich z ist, so wird der mit "f" bezeichnete Verfahrensweg in der Figur 6a zu einem zweite Prüfschritt 62 weiterverfolgt, in dem überprüft wird, ob x = x2 und x ≠ x1 ist, das heisst, dass z2 in der Spalte von z und z1 in einer anderen Spalte als z steht. Ist diese Bedingung erfüllt, wird ebenfalls z1 ausgewählt und es wird zu dem ersten Endschritt 80 weiterverzweigt. Ist dies nicht der Fall, so wird zu einem dritten Prüfschritt 63 weiterverzweigt, in dem überprüft wird, ob x1< x < x2 oder ob x2 < x < x1 gilt. Ist dies der Fall, so wird zu einem vierten Prüfschritt 64 weiterverzweigt, in dem überprüft wird, ob x2 < x1 ist. Ist dies der Fall, so wird ebenfalls zu dem ersten Endschritt 80 weiterverzweigt und z1 wird ausgewählt. Ist dies nicht der Fall, so wird zu einem zweiten Endschritt 82 weiterverzweigt, in dem z2 als Ergebnis ausgewählt wird und mit dem der Vergleichsschritt 51 ebenfalls beendet wird. Wird in dem dritten Prüfschritt 63 festgestellt, dass die angegebene Bedingung x1 < x < x2 oder x2 < x < x1 nicht erfüllt ist, so wird zu einem fünften Prüfschritt 65 weiterverzweigt, in dem der Abstand d der Zeilen überprüft wird, indem zwischen y und y1 sowie zwischen y und y2 verglichen wird. Ist d(y, y1) > d (y, y2) so wird zu dem zweiten Endschritt 82 verzweigt. Ist d (y, y1) < d (y, y2), so wird zu dem ersten Endschritt 80 weiterverzweigt. Ist d (y, y1) = d(y, y2) wird zu einem sechsten Prüfschritt 66 weiterverzweigt, in dem das Verhältnis von x1 zu x2 überprüft wird. Gilt x1 > x2, wird zu dem zweiten Endschritt 82 weiterverzweigt, gilt x1 < x2, so wird zu dem ersten Endschritt 80 weiterverzweigt, und gilt x1 = x2 so wird zu einem siebten Prüfschritt 67 weiterverzweigt, in dem überprüft wird, ob y1 > y2 gilt. Ist dies der Fall, so wird zu dem ersten Endschritt 80, andernfalls zu dem zweiten Endschritt 82 weiterverzweigt. Damit ist der Vergleichsschritt 51 beendet und eine eindeutige Entscheidung zwischen den Zeichen z1 und z2 gewährleistet. Das zu der Figur 6a beschriebene Verfahren ermöglicht, dass bei einem Druck auf die erste Taste 8 der Richtungseingabevorrichtung 7 für den Fall, das sich rechts von dem zunächst eingebbaren Zeichen kein Zeichen mehr in dem Zeichenfeld 12 befindet, das am weitesten links liegende Zeichen des Zeichenfeldes 12 ausgewählt wird. Es wird jeweils das Zeichen ausgewählt, das möglichst nah an der Zeile oder sogar in der Zeile des bisher durch den Auswahlrahmen 15 gekennzeichneten Zeichens liegt.

In der Figur 6b ist ein weiteres Ausführungsbeispiel für den Vergleichsschritt 51 dargestellt, das ebenfalls anhand einer Betätigung der ersten Taste 8 der Richtungseingabevorrichtung 7 erläutert wird. Bei dem Verfahren gemäß der Figur 6b werden bei einer Betätigung der ersten Taste 8 bereits in dem Ermittlungsschritt 50 in der Figur 5 die auswählbaren Elemente entsprechend der Betätigung der ersten Taste 8 daraufhin überprüft, ob nur ein auswählbares Element rechts von dem bisher von dem Auswahlrahmen 15 umgebenen Element liegt. Ist dies der Fall, steht ein eingebbares Zeichen ebenso fest, wie für den Fall, dass kein auswählbares Zeichen rechts von dem bisher eingebbaren Zeichen liegt, das dann das ausgewählte Element bleibt. Ist hierdurch keine eindeutige Zuordnung möglich, werden in dem Ermittlungsschritt 50 von den auswählbaren Zeichen alle diejenigen auswählbaren Zeichen ermittelt, die rechts von dem bisher ausgewählten Element in dem Zeichenfeld 12 liegen, also deren Spaltenwert größer als der Spaltenwert des bisher eingebbaren Zeichens ist. Der Ermittlungsschritt 50 beginnt dann mit einem Initialisierungsschritt 81, nach dem ein erster Prüfschritt 65' ausgeführt wird, der dem fünften Prüfschritt 65 gemäß der Figur 6a entspricht. Hieran schließt sich bei Gleichheit des Zeilenabstands, also bei d(y, y1) = d(y, y2), ein zweiter Prüfschritt 68 an, in dem überprüft wird, ob x1 < x2 ist. Ist dies der Fall, wird in dem ersten Endschritt 80 das Zeichen z1 ausgewählt. Ist x1 nicht kleiner als x2, so wird in einem dritten Prüfschritt 67', der dem siebten Prüfschritt 67 aus der Figur 6a entspricht, überprüft, ob y1 > y2 ist. Entsprechend dem siebten Prüfschritt 67 aus der Figur 6a wird hierdurch für eine Verzweigung zu dem ersten Endschritt 80 oder dem zweiten Endschritt 82 entschieden. Hierdurch wird das Zeichen ausgewählt, das ausgehend von der bisherigen Position rechts von dem bisher eingebbaren Zeichen möglichst nah an der Zeile des bisher eingebbaren Zeichens oder sogar in der Zeile selbst liegt.

In der Figur 7a ist ein Ausführungsbeispiel für die Positionierung innerhalb des Ermittlungsschritts 31 gemäß der Figur 3 detailliert dargestellt. In einem ersten Bestimmungsschritt 120 wird die Menge der Zeichen bestimmt, die noch ausgewählt werden können. Bei einem ersten Prüfschritt 121 wird überprüft, ob nur ein einziges Zeichen ausgewählt werden kann. Ist dies der Fall, so wird zu einem Endschritt 122 verzweigt und der Auswahlrahmen wird um dieses Zeichen positioniert. Das Verfahren wird mit dem Eingabeschritt 32 gemäß der Figur 3 fortgeführt. Ist eine Eingabe nicht eindeutig, so werden die in dem Bestimmungsschritt 120 ermittelten, auswählbaren Zeichen hinsichtlich des Zeichens untersucht, um das der Auswahlrahmen 15 positioniert werden soll. Mit einem Vergleichsschritt 122 erfolgt eine Untersuchung gemäß den zu den Figuren 7b oder 7c beschriebenen Verfahren, wobei jeweils zwei Zeichen miteinander verglichen werden. In einem anschließenden Prüfschritt 124 wird überprüft, ob alle Zeichen bereits durch mindestens einen Vergleich abgearbeitet wurden. Ist dies nicht der Fall, wird zu dem Vergleichsschritt 123 zurückverzweigt und das bei der vorherigen Ausführung des Vergleichsschritts 123 als Ergebnis ermittelte Zeichen sowie ein nächstes, noch nicht durch den Vergleichsschritt 123 bearbeitetes auswählbare Zeichen werden bei der nächsten Ausführung des Vergleichsschritts 123 verglichen. Das nächste zu untersuchende Zeichen wird hierbei bevorzugt nach einer alphabetischen Reihenfolge ausgewählt. Wird in dem Prüfschritt 124 festgestellt, dass die Liste abgearbeitet wurde, wird zu einem Endschritt 125 verzweigt und das bei der letzten Durchführung des Vergleichsschritts 123 ermittelte Zeichen wird als das Zeichen gewählt, um das der Auswahlrahmen 15 gesetzt wird.

In der Figur 7b ist ein erstes Ausführungsbeispiel für ein Verfahren zum Vergleich zweier Zeichen für die Positionierung des Auswahlrahmens 15 nach der Auswahl eines Zeichens gemäß dem Vergleichsschritt 123 in der Figur 7a dargestellt. Hierbei erfolgt eine Neupositionierung nach der Auswahl eines Zeichens möglichst in der Mitte des Zeichenfeldes 12. Hierzu wird eine gegebenenfalls virtuelle Position eines Zeichens zm aus einer Mittelspalte xm und einer Mittelzeile ym als Mitte des Zeichenfeldes 12 festgelegt. Nach einem Initialisierungsschritt 90 wird in einem ersten Prüfschritt 91 überprüft, wie sich die Summe des Abstands von x1 zu xm sowie y1 zu ym zu der Summe aus dem Abstand x2 zu xm und y2 zu ym verhält. Ist d(z1,zm) > d(z2,zm), so wird z2 in einem ersten Endschritt 100 als das nächste, mit dem Auswahlrahmen 15 zu kennzeichnende Zeichen ausgewählt. Ist d(z1,zm) < d(z2,zm), so wird in einem zweiten Endschritt 101 z1 als das zu kennzeichnende Zeichen ausgewählt. Bei Gleichheit wird zu einem zweiten Prüfschritt 92 weiterverzweigt. In dem zweiten Prüfschritt wird d(y1,ym) mit d(y2,ym) verglichen. Ist d(y1,ym) > d(y2,ym), so wird zu dem ersten Endschritt 100 verzweigt, in dem Z2 als das mit dem Auswahlrahmen 15 zu kennzeichnende Zeichen ausgewählt wird. Ist d(y1,ym) < d(y2,ym), so wird zu dem zweiten Endschritt 101 verzweigt. Bei Gleichheit wird zu einem dritten Prüfschritt 93 verzweigt, in dem geprüft wird, wie sich x1 zu x2 verhält. Gilt x1 > x2, wird zu dem ersten Endschritt 100 verzweigt. Gilt x1 < x2, so wird zu dem zweiten Endschritt 101 verzweigt und gilt x1 = x2 so wird zu dem vierten Prüfschritt 94 verzweigt, in dem geprüft wird, ob y1 > y2 ist. Ist dies der Fall, so wird zu dem zweiten Endschritt 101, andernfalls zu dem ersten Endschritt 100 verzweigt. Hierdurch wird der Auswahlrahmen 15 möglichst mittig in dem Zeichenfeld 12 angeordnet.

In der Figur 7c ist ein weiteres Ausführungsbeispiel für einen Vergleichsschritt 123 dargestellt. An einen Initialisierungsschritt 103 schließt sich ein erster Prüfschritt 104 an, an dem d(z,z1) mit d(z,z2) verglichen wird. Bei Gleichheit wird zu dem zweiten Prüfschritt 105 verzweigt, in dem d(y,y1) mit d(y,y2) verglichen wird. Bei Gleichheit wird zu einem anschließenden dritten Prüfschritt 106 verzweigt, in dem d(z1,zm) mit d(z2,zm) verglichen wird. Bei Gleichheit wird zu einem anschließenden vierten Prüfschritt 107 verzweigt, in dem d(y1,ym) mit d(y2,ym) verglichen wird. Bei Gleichheit wird in dem anschließenden fünften Prüfschritt 108 x1 mit x2 verglichen. Bei Gleichheit schließt sich hieran ein sechster Prüfschritt 110 an, in dem geprüft wird, ob y1 > y2 gilt. Falls nein, wird zu einem ersten Endschritt 100 verzweigt, in dem z1 als das Zeichen gewählt wird, um das der Auswahlrahmen 15 zu positionieren ist. Falls ja, wird zu einem zweiten Endschritt 101 verzweigt, in dem z2 als das hierfür vorgesehene Zeichen ausgewählt wird. Wird in einem der vorhergehenden Prüfschritte 104, 105, 106, 107, 108 festgestellt, ausgehend von dem ersten Prüfschritt 104 bis zu dem fünften Prüfschritt, dass die oben jeweils zuerst genannte Größe kleiner als die jeweils an zweiter Stelle genannte Größe ist, so wird ebenfalls zu dem ersten Endschritt 100 verzweigt und weitere Prüfschritte nicht mehr durchgeführt. Wird dagegen in einem der Prüfschritte festgestellt dass die zweite genannte Größe kleiner als die jeweils erste ist, so wird zu dem zweiten Endschritt 101 verzweigt und ebenfalls weitere Prüfschritte nicht mehr durchgeführt. Der Auswahlrahmen 15 wird hierdurch möglichst in der Nähe des zuvor eingegebenen Zeichens positioniert.

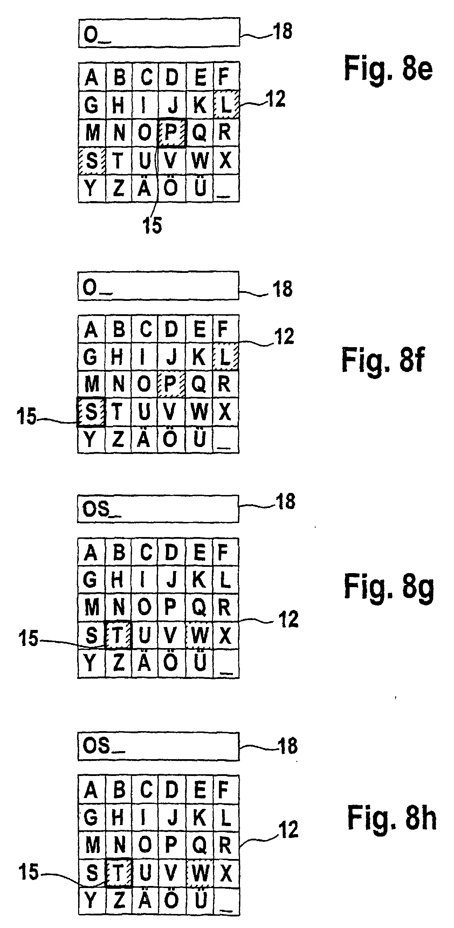

Anhand der Figuren 8a bis 8j wird das Verfahren anhand einer Anzeige 2 beschrieben, wobei ein neues eingebbares Zeichen in die Mitte des Zeichenfeldes 12 gesetzt wird und der Auswahlrahmen 15 nicht über den Rand des Zeichenfeldes 12 auf die gegenüberliegende Seite des Randes des Zeichenfeldes 12 bewegt werden kann (also entsprechend des zu der Figur 6b beschriebenen Vergleichs). In der Figur 8a ist das Zeichenfeld 12 entsprechend der Anzeige 2 in der Figur 1 dargestellt. Bei einer anfänglichen mittigen Positionierung gemäß dem in der Figur 7b beschriebenen Verfahren wird der Buchstabe O als erstes Zeichen gewählt, um das der Auswahlrahmen 15 positioniert wird. Die Zeichenfolge ist bisher leer, nur die Eingabemarke 19 wird in dem Ausgabefeld 18 angezeigt. Alle Zeichen bis auf das Leerzeichen 14 sind auswählbar. Im Anschluß betätigt der Benutzer die Bestätigungstaste 6. Hierdurch wird der Buchstabe O eingegeben. Anschließend sind, wie in der Figur 8b dargestellt, als nächste Zeichen die Buchstaben S, P und L auswählbar, da durch den Buchstaben O sich die Eingabe auf in der Speichereinheit 4 gespeicherten Namen beschränkt. Das sind in diesem Ausführungsbeispiel "Oldenburg", "Opperhausen", "Ost Alb" und "Oswald". Der Auswahlrahmen 15 wird hierbei auf das von "O" aus nächste auswählbare Zeichen "P" gesetzt. Der Buchstabe O wird in dem Ausgabefeld 18 angezeigt. Im Anschluß betätigt der Benutzer die erste Taste 8 "nach rechts". Der Auswahlrahmen 15 wird auf das von P aus nach rechts nächste, auswählbare Zeichen "L" gesetzt, was in der Figur 8c dargestellt ist. Anschließend betätigt der Benutzer nochmals die erste Taste 8. Der Auswahlrahmen wird nicht verschoben, da rechts von "L" kein auswählbares Zeichen existiert. Es bleibt in der Figur 8d bei einer Anzeigendarstellung gemäß der Figur 8c. Der Benutzer betätigt die dritte Taste 10 "nach links". Der Auswahlrahmen 15 wird auf das von "L" aus nach links nächste, auswählbare Zeichen "P" gesetzt. Dies ist in der Figur 8e dargestellt. Im Anschluß betätigt ein Benutzer nochmals die dritte Taste "nach links" 10. Der Auswahlrahmen 15 wird auf das von "P" aus nach links nächste, auswählbare Zeichen "S" gesetzt, wie es in der Figur 8f dargestellt ist. Der Benutzer betätigt die Bestätigungstaste 6 . In der Figur 8g ist dargestellt, dass das "S" nun in das Ausgabefeld 18 aufgenommen wurde. Der Auswahlrahmen 15 wurde auf den Buchstaben T verschoben. Die Auswahl beschränkt sich nun auf die Namen "Ost Alb" und "Oswald". Der Benutzer betätigt nochmals die dritte Taste 10 "nach links". Der Auswahlrahmen 15 wird nicht versetzt, was in der Figur 8h darstellt wird, da links von "T" kein weiteres, auswählbares Zeichen in dem Zeichenfeld 12 liegt. Im Anschluß betätigt der Benutzer die vierte Taste 11 "nach oben". Der Auswahlrahmen 15 wird erneut nicht versetzt, was in der Figur 8i dargestellt ist, da auch in der Richtung "nach oben" in dem Zeichenfeld 12 kein weiteres Zeichen existiert. Der Benutzer betätigt die Bestätigungstaste 6 und gibt damit den Buchstaben T ein. Hierdurch erkennt die Recheneinheit die Eindeutigkeit der Auswahl der Zeichenfolge. Es wird die Zeichenfolge "Ost Alb" 130 ausgewählt und in dem Ausgabefeld 18 angezeigt, das nun hervorgehoben dargestellt wird. In dem Zeichenfeld 12 selbst ist kein Buchstabe mehr auswählbar, da bereits eine eindeutige Eingabe einer Zeichenfolge erfolgt ist.

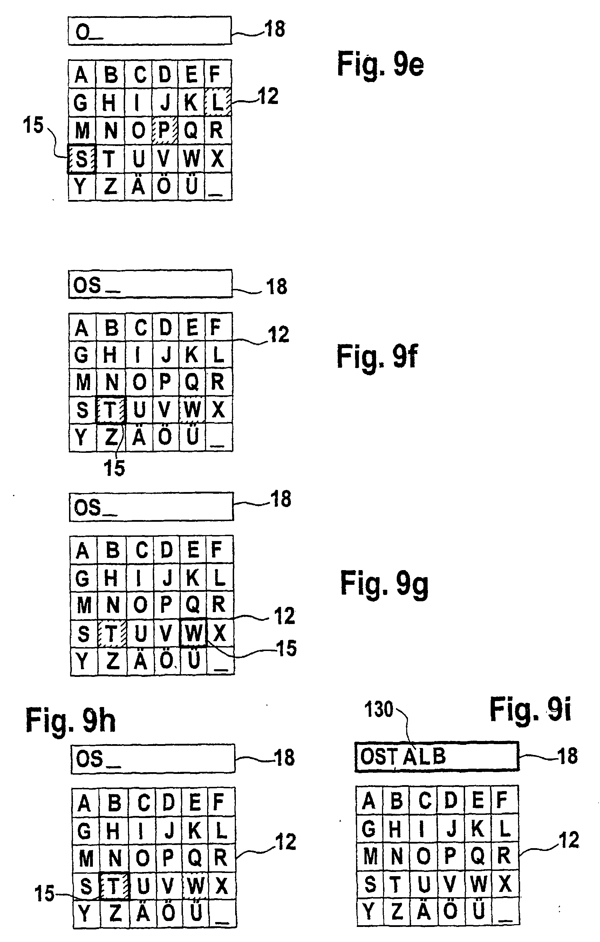

Anhand der Figuren 9a bis 9i ist ein zweites Ausführungsbeispiel für eine Auswahl eines Zeichens mit sogenanntem "wrap around" dargestellt, wobei auch eine Verschiebung des Auswahlrahmens über den Rand des Zeichenfeldes 12 hinaus zu der entgegengesetzten Seite des Zeichenfeldes 12 möglich ist. Die in der Speichereinheit 4 abgelegten Daten entsprechen bei diesem Ausführungsbeispiel den bei der Erläuterung zu der Figur 9a genannten Daten. Die Eingabe entspricht dabei bis zu der Figur 9c den Eingaben zu den Figuren 8a bis 8c, also Drücken der Bestätigungstaste 6 und einmaliger Betätigung der ersten Taste 8 "nach rechts". Im Anschluß hieran wird die erste Taste 8 nach rechts nochmals betätigt. Der Auswahlrahmen 15 wird dabei auf das von L aus nächste, auswählbare Zeichen möglichst nahe in der Zeile von "L" gesetzt. Da rechts von L kein auswählbares Zeichen mehr vorhanden ist wird die Suche am linken Rand des Zeichenfeldes 12 fortgesetzt und der Buchstaben P wird durch den Auswahlrahmen 15 gekennzeichnet. Dies ist in der Figur 9d dargestellt. Anschließend betätigt der Benutzer die dritte Taste 10 "nach links" und es wird der Buchstabe S ausgewählt, wie es in den Figuren 9e gezeigt ist. Der Benutzer betätigt die Betätigungstaste, so dass "S" eingegeben und der Zeichenfolge in dem Ausgabefeld 18 zugefügt wird. Dies ist in der Figur 9f dargestellt, ebenso eine Verschiebung des Auswahlrahmens auf den Buchstaben T. Der Benutzer betätigt die Taste nach links. Da lediglich ein weiterer Buchstabe in der gleichen Zeile vorhanden ist, wird der Auswahlrahmen 15 auf den Buchstaben w verschoben, wie in der Figur 9g dargestellt. Der Benutzer betätigt die vierte Taste 11 "nach oben". Da in dem Zeichenfeld weiter oben kein weiterer Buchstabe vorhanden ist, wird der Auswahlrahmen 15 zu dem anderen, auswählbaren Buchstaben T verschoben, was in der Figur 9h dargestellt ist. Anschließend betätigt der Benutzer die Bestätigungstaste 6, so dass ebenfalls die Zeichenfolge "Ost Alb" als einzig mögliche Zeichenfolge ausgewählt und in dem Ausgabefeld 18 dargestellt wird.

## Patentansprüche

1. Verfahren zur Eingabe einer Zeichenfolge in eine Recheneinheit (1), vorzugsweise in eine Navigationsvorrichtung in einem Fahrzeug, wobei in einer Speichereinheit (4) Zeichenfolgen gespeichert werden, wobei von der Recheneinheit (1) durch einen Vergleich bisher eingegebener Zeichen mit den gespeicherten Zeichenfolgen auswählbare Zeichen für ein nächstes, einzugebendes Zeichen der Zeichenfolge ermittelt werden, wobei die auswählbaren Zeichen in einer Anzeige (2) hervorgehoben angezeigt werden, wobei eines der auswählbaren Zeichen als ein einzugebendes Zeichen angezeigt und als ein nächstes Zeichen der Zeichenfolge durch eine Bestätigungseingabe eingegeben wird, **dadurch gekennzeichnet, dass** die Zeichen in einem zweidimensionalen Feld (12) angezeigt werden, dass von dem eingebbaren Zeichen über eine Richtungseingabe zu einem in der eingegebenen Richtung in dem zweidimensionalen Feld (12) zu dem eingebbaren Zeichen liegenden auswählbaren Zeichen gewechselt wird und dass das auswählbare Zeichen, zu dem gewechselt wird, als eingebbares Zeichen angezeigt wird.

2. Verfahren zur Eingabe einer Zeichenfolge in eine Recheeinheit (1) nach Anspruch 1, **dadurch gekennzeichnet, dass** als eine Richtung eine der Richtungen unten, oben, rechts und links über das Bedienelement, vorzugsweise eine Kreuzwippe, ein Tastenfeld, ein Trackball oder ein Joystick, ausgewählt wird.

3. Verfahren zur Eingabe einer Zeichenfolge in eine Recheeinheit (1) nach einem der vorhergehenden Ansprüche, **dadurch gekennzeichnet, dass** das zweidimensionale Feld (12) durch Zeilen und Spalten von Zeichen gebildet wird, dass bei einer Eingabe der Richtung rechts oder links zu einem auswählbaren Zeichen gewechselt wird, dessen Spalte in dem zweidimensionalen Feld rechts bzw. links von der Spalte des bisher eingebbaren Zeichens liegt und dessen Zeile dabei am nächsten an der Zeile des bisher eingebbaren Zeichens liegt und dass bei einer Eingabe der Richtung unten oder oben zu einem auswählbaren Zeichen gewechselt wird, dessen Zeile in dem Feld unterhalb bzw. oberhalb von der Zeile des bisher eingebbaren Zeichens liegt und dessen Spalte dabei am nächsten an der Spalte des bisher eingebbaren Zeichens liegt

4. Verfahren zur Eingabe einer Zeichenfolge in eine Recheeinheit (1) nach einem der Ansprüche 1-2, **dadurch gekennzeichnet, dass** das zweidimensionale Feld (12) durch Zeilen und Spalten von Zeichen gebildet wird, dass bei einer Eingabe der Richtung rechts oder links zu einem auswählbaren Zeichen gewechselt wird, dessen Spalte in dem zweidimensionalen Feld rechts bzw. links von der Spalte des bisher eingebbaren Zeichens liegt und dessen Spalte dabei am nächsten an der Spalte des bisher eingebbaren Zeichens liegt und dass bei einer Eingabe der Richtung unten oder oben zu einem auswählbaren Zeichen gewechselt wird, dessen Zeile in dem Feld unterhalb bzw. oberhalb von der Zeile des bisher eingebbaren Zeichens liegt und dessen Zeile dabei am nächsten an der Zeile des bisher eingebbaren Zeichens liegt

5. Verfahren zur Eingabe einer Zeichenfolge in eine Recheeinheit (1) nach einem der Ansprüche 3-4, **dadurch gekennzeichnet, dass** für den Fall, dass in der eingegebenen Richtung mehrere auswählbare Zeichen bezüglich der Zeile oder der Spalte gleich nah an dem bisher eingebbaren Zeichen liegen, von diesen Zeichen das dem bisher eingebbaren Zeichen am nächsten liegende Zeichen ausgewählt wird.

6. Verfahren zur Eingabe einer Zeichenfolge in eine Recheeinheit (1) nach einem der vorhergehenden Ansprüche, **dadurch gekennzeichnet, dass** für den Fall, dass in der eingegebenen Richtung kein auswählbares Zeichen in dem Feld liegt, eine Fehlermeldung vorzugsweise akustisch ausgegeben wird.

7. Verfahren zur Eingabe einer Zeichenfolge in eine Recheeinheit (1) nach einem der Ansprüche 1-5, **dadurch gekennzeichnet, dass** für den Fall, dass in der eingegebenen Richtung kein auswählbares Zeichen in dem Feld liegt, eine Suche nach einem nächsten auswählbaren Zeichen ausgehend von einem einem in der eingegebenen Richtung liegenden Rand gegenüberliegenden Rand in der ausgewählten Richtung fortgesetzt wird.

8. Verfahren zur Eingabe einer Zeichenfolge in eine Recheeinheit (1) nach einem der vorhergehenden Ansprüche, **dadurch gekennzeichnet, dass** eine durch eine Eingabe bereits eindeutig bestimmte Zeichenfolge von der Recheneinheit (1) zu einer vollständigen Zeichenfolge ergänzt wird.

9. Verfahren zur Eingabe einer Zeichenfolge in eine Recheeinheit (1) nach einem der vorhergehenden Ansprüche, **dadurch gekennzeichnet, dass** nach der Eingabe eines Zeichens und bevor eine Zeichenfolge eindeutig ausgewählt wird als ein über die Bestätigungseingabe eingebbares Zeichen das zuvor ausgewählte Zeichen oder ein zu dem vorher ausgewählten Zeichen nächstliegendes Zeichen ausgewählt wird.

10. Verfahren zur Eingabe einer Zeichenfolge in eine Recheeinheit (1) nach einem der Ansprüche 1-8, **dadurch gekennzeichnet, dass** nach der Eingabe eines Zeichens und bevor eine Zeichenfolge eindeutig ausgewählt wird als ein über die Bestätigungseingabe eingebbares Zeichen ein Zeichen in der Mitte des Feldes oder ein Zeichen nächstliegend zu der Mitte des Feldes ausgewählt wird.

11. Vorrichtung zur Durchführung des Verfahrens nach einem der vorhergehenden Ansprüche.

12. Verwendung des Verfahrens nach einem der Ansprüche 1-10 zur Eingabe eines Fahrziels in eine Navigationsvorrichtung.

## Claims

1. Method for inputting a sequence of characters into a computing unit (1), preferably into a navigation device in a vehicle, sequences of characters being stored in a memory unit (4), characters which can be selected by comparing previously input characters with the stored sequences of characters being determined by the computing unit (1) for the subsequent character - which is to be input - from a sequence of characters, the characters which can be selected being displayed highlighted in a display (2), one of the selectable characters being displayed as a character which is to be input, and being input as a subsequent character of the sequence of characters by means of a confirmation entry, **characterized in that** the characters are displayed in a two-dimensional field (12), **in that** the system changes, by means of a direction entry, from the inputable character to a selectable character which is located in the entered direction in the two-dimensional field (12) with respect to the inputable character, and **in that** the selectable character to which the system changes is displayed as an inputable character.

2. Method for inputting a sequence of characters into a computing unit (1) according to Claim I, **characterized in that** one of the directions down, up, to the right or to the left is selected as a direction by means of the operator control element, preferably a four-way rocker switch, a pushbutton key array, a trackball or a joystick.

3. Method for inputting a sequence of characters into a computing unit (1) according to one of the preceding claims, **characterized in that** the two-dimensional field (12) is formed by rows and columns of characters, **in that**, when the direction to the right or to the left is input, the system changes to a selectable character whose column is located in the two-dimensional field to the right or to the left of the column of the previously inputable character and whose row is located here closest to the row of the previously inputable character, and **in that**, when the direction down or up is input, the system changes to a selectable character whose row is located in the field underneath or above the row of the previously inputable character and whose column is located here closest to the column of the previously inputable character.

4. Method for inputting a sequence of characters into a computing unit (1) according to one of Claims 1 - 2, **characterized in that** the two-dimensional field (12) is formed by rows and columns of characters, **in that**, when the direction to the right or to the left is input, the system changes to a selectable character whose column is located in the two-dimensional field to the right or to the left of the column of the previously inputable character and whose column is located here closest to the column of the previously inputable character, and **in that**, when the direction down or up is input, the system changes to a selectable character whose row is located in the field underneath or above the row of the previously inputable character and whose row is located here closest to the row of the previously inputable character.

5. Method for inputting a sequence of characters into a computing unit (1) according to one of Claims 3 - 4, **characterized in that**, if a plurality of selectable characters which can be selected in the direction which has been input are located equally close to the previously inputable character with respect to the row or the column, that character selects the character which is located closest to the previously inputable character.

6. Method for inputting a sequence of characters into a computing unit (1) according to one of the preceding claims, **characterized in that**, if no selectable character is located in the field in the direction which has been input, a fault message is preferably output audibly.

7. Method for inputting a sequence of characters into a computing unit (1) according to one of Claims 1 - 5, **characterized in that**, if no selectable character is located in the field in the direction which has been input, a search for the next selectable character is continued starting from an edge in the selected direction which is located opposite an edge which is located in the direction which has been input.

8. Method for inputting a sequence of characters into a computing unit (1) according to one of the preceding claims, **characterized in that** a sequence of characters which has already been determined unambiguously by an input is supplemented by the computing unit (1) to form a complete sequence of characters.

9. Method for inputting a sequence of characters into a computing unit (1) according to one of the preceding claims, **characterized in that**, after a character has been input and before a sequence of characters is unambiguously selected, the previously selected character or a character which is located closest to the previously selected character is selected as a character which can be input by means of the confirmation entry.

10. Method for inputting a sequence of characters into a computing unit (1) according to one of Claims 1 - 8, **characterized in that**, after a character has been input and before a sequence of characters is unambiguously selected, a character in the centre of the field or a character which is located closest to the centre of the field is selected as a character which can be input by means of the confirmation entry.

11. Device for carrying out the method according to one of the preceding claims.

12. Use of the method according to one of Claims 1 - 10 for inputting a destination into a navigation device.

## Revendications

1. Procédé permettant la saisie d'une chaîne de caractères dans une unité de calcul (1), de préférence dans un dispositif de navigation dans un véhicule, selon lequel des chaînes de caractères sont stockées dans une unité de mémoire (4), des caractères pouvant être sélectionnés pour un caractère suivant à saisir de la chaîne de caractères sont déterminés par l'unité de calcul (1) grâce à une comparaison des caractères saisis jusqu'ici et des chaînes de caractères stockées, pour lequel les caractères pouvant être sélectionnés apparaissent sur un affichage (2), l'un des caractères pouvant être sélectionnés apparaît comme un caractère à saisir et saisi comme un caractère suivant de la chaîne de caractères grâce à une saisie de confirmation,
**caractérisé en ce que**
les caractères sont affichés dans un champ à deux dimensions (12) et d'un caractère saisi à un caractère pouvant être sélectionné dans la direction indiquée vers le caractère à saisir du champ à deux dimensions (12), et le caractère pouvant être sélectionné qui est concerné par le changement apparaît sous forme de caractère pouvant être saisi.

2. Procédé permettant la saisie d'une chaîne de caractères dans une unité de calcul (1) selon la revendication 1,
**caractérisé en ce que**
l'une des directions vers le bas, vers le haut, vers la droite et vers la gauche est sélectionnée comme direction par l'élément de commande, de préférence par un bouton à bascule en croix, par un clavier, par une boule de commande ou par un joystick.

3. Procédé permettant la saisie d'une chaîne de caractères dans une unité de calcul (1) selon l'une quelconque des revendications précédentes,
**caractérisé en ce que**
le champ à deux dimensions (12) est composé de lignes et de colonnes de caractères, et lors d'une saisie de la direction vers la droite ou vers la gauche, on passe à un caractère pouvant être sélectionné dont la colonne dans le champ à deux dimensions se trouve à droite ou à gauche de la colonne du caractère pouvant jusqu'ici être saisi et dont la ligne se trouve alors le plus proche possible de la ligne du caractère pouvant jusqu'ici être saisi, et lors d'une saisie de la direction vers le bas ou vers le haut, on passe à un caractère pouvant être sélectionné dont la ligne dans le champ se trouve au-dessous ou au-dessus de la ligne du caractère pouvant jusqu'ici être saisi et dont la colonne se trouve alors le plus proche possible de la colonne du caractère pouvant jusqu'ici être saisi.

4. Procédé permettant la saisie d'une chaîne de caractères dans une unité de calcul (1) selon l'une des revendications 1 ou 2,
**caractérisé en ce que**
le champ à deux dimensions (12) est composé de lignes et de colonnes de caractères,
lors d'une saisie de la direction vers la droite ou vers la gauche, on passe à un caractère pouvant être sélectionné dont la colonne dans le champ à deux dimensions se trouve à droite ou à gauche de la colonne du caractère pouvant jusqu'ici être saisi et dont la colonne se trouve alors le plus proche possible de la colonne du caractère pouvant jusqu'ici être saisi et
lors d'une saisie de la direction vers le bas ou vers le haut, on passe à un caractère pouvant être sélectionné dont la ligne dans le champ se trouve au-dessous ou au-dessus de la ligne du caractère pouvant jusqu'ici être saisi et dont la ligne se trouve alors le plus proche possible de la ligne du caractère pouvant jusqu'ici être saisi.

5. Procédé permettant la saisie d'une chaîne de caractères dans une unité de calcul (1) selon l'une des revendications 3 ou 4,
**caractérisé en ce que**
pour le cas où, dans la direction indiquée, plusieurs caractères pouvant être sélectionnés se trouvent, en termes de ligne ou de colonne, à proximité du caractère pouvant jusqu'ici être saisi et
à partir de ces caractères, le caractère se trouvant le plus proche possible du caractère pouvant jusqu'ici être saisi est sélectionné.

6. Procédé permettant la saisie d'une chaîne de caractères dans une unité de calcul (1) selon l'une quelconque des revendications précédentes,
**caractérisé en ce que**
pour le cas où, dans la direction indiquée, aucun caractère pouvant être sélectionné ne se trouve dans le champ, un message d'erreur est émis de préférence de manière sonore.

7. Procédé permettant la saisie d'une chaîne de caractères dans une unité de calcul (1) selon la revendication 1 à 5,
**caractérisé en ce que**
pour le cas où, dans la direction indiquée, aucun caractère pouvant être sélectionné ne se trouve dans le champ, une recherche d'un caractère suivant pouvant être sélectionné est effectuée dans la direction sélectionnée à partir d'une extrémité opposée à l'extrémité se trouvant dans la direction indiquée.

8. Procédé permettant la saisie d'une chaîne de caractères dans une unité de calcul (1) selon l'une quelconque des revendications précédentes,
**caractérisé en ce qu'**
une chaîne de caractères déjà clairement définie par une saisie est complétée par l'unité de calcul (1) de manière à obtenir une chaîne de caractères complète.

9. Procédé permettant la saisie d'une chaîne de caractères dans une unité de calcul (1) selon l'une quelconque des revendications précédentes,
**caractérisé en ce qu'**
après la saisie d'un caractère et avant qu'une chaîne de caractères ne soit clairement sélectionnée comme l'un des caractères pouvant être saisis par la saisie de confirmation, le caractère précédemment sélectionné ou bien un caractère se trouvant proche du caractère précédemment sélectionné est choisi.

10. Procédé permettant la saisie d'une chaîne de caractères dans une unité de calcul (1) selon la revendication 1 à 8,
**caractérisé en ce qu'**
après la saisie d'un caractère et avant qu'une chaîne de caractères ne soit clairement sélectionnée comme l'un des caractères pouvant être saisis par la saisie de confirmation, un caractère situé au centre du champ ou un caractère se trouvant à proximité du centre du champ est sélectionné.

11. Dispositif permettant d'exécuter le procédé selon l'une quelconque des revendications précédentes.

12. Utilisation du procédé selon l'une des revendications 1 à 10 pour saisir une destination de trajet dans un dispositif de navigation.
